# EUROPEAN PATENT APPLICATION

(11) **EP 4 472 101 A1**
(43) Date of publication of application: **04.12.2024**
(21) Application number: 23745807.0
(22) Date of filing: 04.01.2023
(51) Int. Cl.: H04B 7/185

(54) **SATELLITE CONTROL METHOD, SERVICE SWITCHING METHOD, DEVICE AND STORAGE MEDIUM**

(30) Priority: 27.01.2022 CN 202210101665
(71) Applicant: Datang Mobile Communications Equipment Co., Ltd., Beijing 100085 (CN)
(72) Inventor: CHEN, Shanzhi, Beijing 100085 (CN); HAN, Bo, Beijing 100085 (CN); LIANG, Bingyuan, Beijing 100085 (CN); QIN, Zhaotao, Beijing 100085 (CN); MIAO, Deshan, Beijing 100085 (CN); KANG, Shaoli, Beijing 100085 (CN)
(74) Representative: Maiwald GmbH
(86) International application number: PCT/CN2023/070393
(87) International publication number: WO 2023/142922

(57) **Abstract**

A satellite control method, a service switching method, a device and a storage medium are provided, the method includes: obtaining, by a first satellite, interference avoidance notification information, where the interference avoidance notification information is interference avoidance notification information relative to a second satellite; in a case that the first satellite enters or is about to enter an interference avoidance protection band of the second satellite, performing, by the first satellite, an interference avoidance operation according to the interference avoidance notification information, where the interference avoidance operation includes a beam management.

## Description

### CROSS REFERENCE OF RELATED APPLICATION

The present disclosure claims a priority of Chinese patent disclosure No. 202210101665.6 filed on January 27, 2022, which is incorporated herein by reference in its entirety.

### TECHNICAL FIELD

The present disclosure relates to the field of communication technology, and in particular to a satellite control method, a service switching method, a device and a storage medium.

### BACKGROUND

In satellite communication systems, due to the scarcity of frequency resources, the operational frequency bands of satellite systems in different orbits may overlap. This overlap can lead to co-channel interference problems between satellite systems in different orbits as satellites move. For example, when a None Geographical Stationary Orbit (NGSO) satellite approaches the line of connection between a Geographical Stationary Orbit (GSO) satellite and a GSO user, the reception gain of the interference signal from the GSO user to the NGSO satellite gradually increases. Consequently, the co-channel interference caused by the NGSO satellite to the GSO user also becomes more severe. Thus, it is evident that there is a significant interference issue present in the current satellite communication systems.

### SUMMARY

The embodiments of the present disclosure provide a satellite control method, a service switching method, a device and a storage medium, to solve the problem of serious interference in a satellite communication system.

A satellite control method is provided in the embodiment of the present disclosure, including:
obtaining, by a first satellite, interference avoidance notification information, where the interference avoidance notification information is interference avoidance notification information relative to a second satellite;
in a case that the first satellite enters or is about to enter an interference avoidance protection band of the second satellite, performing, by the first satellite, an interference avoidance operation according to the interference avoidance notification information, where the interference avoidance operation includes a beam management.

Optionally, the interference avoidance notification information includes relevant information of the second satellite.

Optionally, the relevant information of the second satellite includes at least one of the following:
ephemeris information of the second satellite;
coverage position information of the second satellite;
frequency information of the second satellite;
beam direction information of the second satellite; or
a beam width of the second satellite.

Optionally, the interference avoidance notification information includes beam management information.

Optionally, the beam management information includes at least one of the following:
beam scheduling information or beam steering information.

Optionally, the obtaining the interference avoidance notification information includes:
obtaining, by the first satellite, the interference avoidance notification information through a ground gateway.

Optionally, the obtaining, by the first satellite, the interference avoidance notification information through the ground gateway includes one of the following:
receiving, by the first satellite, the interference avoidance notification information sent by a ground network controller, through the ground gateway;
receiving, by the first satellite, the interference avoidance notification information sent by a satellite controller, through the ground gateway;
receiving, by the first satellite, the interference avoidance notification information sent by a network operation and control center, through the ground gateway; or
receiving, by the first satellite, the interference avoidance notification information sent by a ground base station, through the ground gateway.

Optionally, the beam management includes one of the following conditions:
beam scheduling and beam steering.

Optionally, the beam scheduling includes:
not scheduling a first beam, where the first beam is a beam in the first satellite that satisfies at least one of the following:
frequency information matches the frequency information of the second satellite;
a coverage position matches a coverage position of the second satellite;
   and/or
the beam steering includes at least one of the following:
turning off a second beam;
reducing a beam transmission power;
changing an operating frequency of a third beam;
changing a coverage position of a fourth beam;
where the second beam is a beam of the first satellite that satisfies at least one of the following conditions:
frequency information matches the frequency information of the second satellite;
a coverage position matches a coverage position of the second satellite;
the third beam is a beam in the first satellite, whose frequency information matches the frequency information of the second satellite;
the fourth beam is a beam in the first satellite, whose coverage position matches the coverage position of the second satellite.

Optionally, the method further includes:
sending, by the first satellite, a notification message to a terminal, where the notification message is used by the terminal to perform a service switching.

Optionally, the notification message includes:
new beam information, used by the terminal to select a new beam to access.

Optionally, the new beam information includes at least one of the following:
an effective time of the new beam, a beam direction of the new beam, or frequency band information of the new beam.

A satellite control method is provided in the embodiment of the present disclosure, including:
generating, by a communication device, interference avoidance notification information, where the interference avoidance notification information is interference avoidance notification information relative to a second satellite;
sending, by the communication device, the interference avoidance notification information to a first satellite, where the first satellite is a satellite that enters or is about to enter an interference avoidance protection band of the second satellite.

Optionally, the interference avoidance notification information includes relevant information of the second satellite.

Optionally, the relevant information of the second satellite includes at least one of the following:
ephemeris information of the second satellite;
coverage position information of the second satellite;
frequency information of the second satellite;
beam direction information of the second satellite; or
a beam width of the second satellite.

Optionally, the interference avoidance notification information includes beam management information.

Optionally, the beam management information includes at least one of the following:
beam scheduling information or beam steering information.

Optionally, the sending, by the communication device, the interference avoidance notification information to the first satellite includes:
sending, by the communication device, the interference avoidance notification information to the first satellite, through a ground gateway.

Optionally, the method further includes:
sending, by the communication device, a notification message to a terminal, where the notification message is used by the terminal to perform a service switching, and the terminal is a terminal associated with the first satellite.

Optionally, the notification message includes:
new beam information, used by the terminal to select a new beam to access.

Optionally, the new beam information includes at least one of the following:
an effective time of the new beam, a beam direction of the new beam, or frequency band information of the new beam.

Optionally, the method further includes:
sending, by the communication device, an interference assistance message to a third satellite, where the interference assistance message is used by the third satellite to adjust a beam angle to cover a coverage area of the first satellite.

A service switching method is provided in the embodiment of the present disclosure, including:
obtaining, by a terminal, a notification message, where the notification message is used by the terminal to perform a service switching, where the terminal is associated with a first satellite, the first satellite is a satellite that enters or is about to enter an interference avoidance protection band of the second satellite;
performing, by the terminal, the service switching based on the notification message.

Optionally, the notification message includes:
new beam information, used by the terminal to select a new beam to access;
the service switching includes:
selecting a new beam to access.

Optionally, the new beam information includes at least one of the following:
an effective time of the new beam, a beam direction of the new beam, or frequency band information of the new beam.

A satellite is provided in the embodiment of the present disclosure, the satellite being a first satellite, including: a memory, a transceiver, and a processor, where
the memory is configured to store a computer program; a transceiver is configured to send and receive data under a control of the processor; and the processor is configured to read the computer program in the memory to perform:
obtaining interference avoidance notification information, where the interference avoidance notification information is interference avoidance notification information relative to a second satellite;
in a case that the first satellite enters or is about to enter an interference avoidance protection band of the second satellite, performing an interference avoidance operation according to the interference avoidance notification information, where the interference avoidance operation includes a beam management.

Optionally, the interference avoidance notification information includes relevant information of the second satellite.

Optionally, the interference avoidance notification information includes beam management information.

Optionally, the obtaining the interference avoidance notification information includes:
obtaining, by the first satellite, the interference avoidance notification information through a ground gateway.

Optionally, the beam management includes one of the following conditions:
beam scheduling and beam steering.

Optionally, the satellite further includes:
sending, by the first satellite, a notification message to a terminal, where the notification message is used by the terminal to perform a service switching.

A communication device is provided in the embodiment of the present disclosure, including: a memory, a transceiver and a processor, where
the memory is configured to store a computer program; a transceiver is configured to send and receive data under a control of the processor; and the processor is configured to read the computer program in the memory to perform:
generating interference avoidance notification information, where the interference avoidance notification information is interference avoidance notification information relative to a second satellite;
sending the interference avoidance notification information to a first satellite, where the first satellite is a satellite that enters or is about to enter an interference avoidance protection band of the second satellite.

Optionally, the interference avoidance notification information includes relevant information of the second satellite.

Optionally, the interference avoidance notification information includes beam management information.

A terminal is provided in the embodiment of the present disclosure including: a memory, a transceiver and a processor, where
the memory is configured to store a computer program; a transceiver is configured to send and receive data under a control of the processor; and the processor is configured to read the computer program in the memory to perform:
obtaining a notification message, where the notification message is used by the terminal to perform a service switching, where the terminal is associated with a first satellite, the first satellite is a satellite that enters or is about to enter an interference avoidance protection band of the second satellite;
performing the service switching based on the notification message.

A satellite is provided in the embodiment of the present disclosure, the satellite being a first satellite, including:
an obtaining unit, configured to obtain interference avoidance notification information, where the interference avoidance notification information is interference avoidance notification information relative to a second satellite;
an executing unit, configured to, in a case that the first satellite enters or is about to enter an interference avoidance protection band of the second satellite, perform an interference avoidance operation according to the interference avoidance notification information, where the interference avoidance operation includes a beam management.

A communication device is provided in the embodiment of the present disclosure, including:
a generating unit, configured to generate interference avoidance notification information, where the interference avoidance notification information is interference avoidance notification information relative to a second satellite;
a first sending unit, configured to send the interference avoidance notification information to a first satellite, where the first satellite is a satellite that enters or is about to enter an interference avoidance protection band of the second satellite.

A terminal is provided in the embodiment of the present disclosure, including:
an obtaining unit, configured to obtain a notification message, where the notification message is used by the terminal to perform a service switching, where the terminal is associated with a first satellite, the first satellite is a satellite that enters or is about to enter an interference avoidance protection band of the second satellite;
an executing unit, configured to perform the service switching based on the notification message.

A processor-readable storage medium, storing a computer program, where the computer program is configured to cause the processor to execute the satellite control method at the first satellite side in the embodiment of the present disclosure, or the computer program is configured to cause the processor to execute the satellite control method at the second satellite side in the embodiment of the present disclosure, or the computer program is configured to cause the processor to execute the service switching method in the embodiment of the present disclosure.

According to an embodiment of the present disclosure, a first satellite obtains interference avoidance notification information, and the interference avoidance notification information is interference avoidance notification information relative to a second satellite; when the first satellite enters or is about to enter an interference avoidance protection band of the second satellite, the first satellite performs an interference avoidance operation according to the interference avoidance notification information, and the interference avoidance operation includes beam management. In this way, since the interference avoidance operation is performed based on the interference avoidance notification information, the interference of the first satellite relative to the second satellite can be reduced or eliminated.

### BRIEF DESCRIPTION OF THE DRAWINGS

Fig. 1 is a schematic view of a network architecture applicable to the embodiment of the present disclosure;
Fig.2 is a flow chart of a satellite control method in an embodiment of the present disclosure;
Fig.3 is a schematic view of an interference avoidance in an embodiment of the present disclosure;
Fig.4 is a flow chart of another satellite control method in an embodiment of the present disclosure;
Fig.5 is a flow chart of a service switching method in an embodiment of the present disclosure;
Fig.6 is a schematic view of another interference avoidance in an embodiment of the present disclosure;
Fig.7 is a schematic view of another interference avoidance in an embodiment of the present disclosure;
Fig.8 is a schematic view of another interference avoidance in an embodiment of the present disclosure;
Fig.9 is a schematic view of another interference avoidance in an embodiment of the present disclosure;
Fig. 10 is a structural view of a satellite in an embodiment of the present disclosure;
Fig. 11 is a structural view of a communication device in an embodiment of the present disclosure;
Fig. 12 is a structural view of a terminal in an embodiment of the present disclosure;
Fig. 13 is a structural view of another satellite in an embodiment of the present disclosure;
Fig. 14 is a structural view of another communication device provided in an embodiment of the present disclosure; and
Fig. 15 is a structural view of another terminal provided in an embodiment of the present disclosure.

### DETAILED DESCRIPTION

In order to make the technical problems, technical solutions and advantages to be solved by the present disclosure more clear, a detailed description will be given below with reference to the accompanying drawings and specific embodiments.

In the embodiments of the present disclosure, the term "and/or" describes the association relationship of associated objects, indicating that three relationships may exist. For example, A and/or B may represent: A exists alone, A and B exist at the same time, and B exists alone. The character "/" generally indicates that the associated objects are in an "or" relationship.

The term "plurality" in the embodiments of the present disclosure refers to two or more than two, and other quantifiers are similar thereto.

The following will be combined with the drawings in the embodiments of the present disclosure to clearly and completely describe the technical solutions in the embodiments of the present disclosure. Obviously, the described embodiments are only part of the embodiments of the present disclosure, not all of the embodiments. Based on the embodiments in the present disclosure, all other embodiments obtained by ordinary technicians in this field without making creative work are within the scope of protection of the present disclosure.

The embodiments of the present disclosure provide a satellite control method, a service switching method, a device and a storage medium to solve the problem of serious interference in a satellite communication system.

Among them, the method and the device are based on the same application concept. Since the principles of solving problems by the method and the device are similar, the embodiment of the device and the method can refer to each other, and the repeated parts will not be repeated.

The technical solution provided by the embodiments of the present disclosure can be applicable to a variety of systems, especially the sixth generation mobile communication technology (6th Generation, 6G) system. For example, the applicable system may be a Global System of Mobile communication (GSM) system, a Code Division Multiple Access (CDMA) system, a Wideband Code Division Multiple Access (WCDMA) system, a General Packet Radio Service (GPRS) system, a Long Term Evolution (LTE) system, a LTE Frequency Division Duplex (FDD) system, a LTE Time Division Duplex (TDD) system, a Long Term Evolution Advanced (LTE - A) system, a Universal Mobile Telecommunication System (UMTS), and a Worldwide interoperability for Microwave Access (WiMAX) system, 5G New Radio (NR) system, 6G system, etc. These systems include terminal equipment and network equipment. The system can also include core network parts, such as Evolved Packet System (EPS), 5th Generation System (5GS), etc.

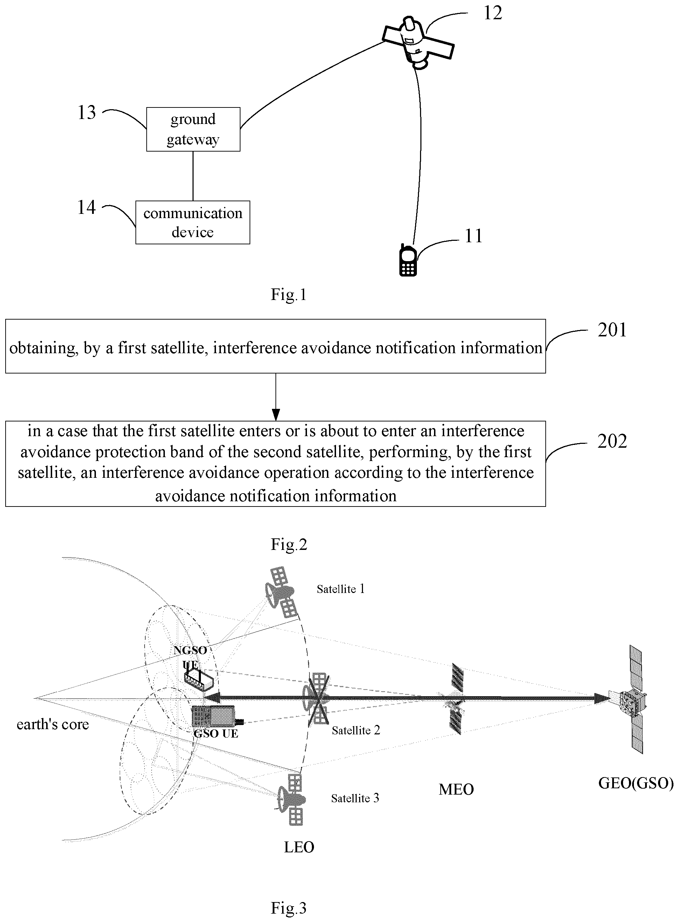

Please refer to Fig. 1, which is a schematic view of a network architecture applicable to the embodiment of the present disclosure. As shown in Fig. 1, the network architecture includes a terminal 11 and a satellite 12.

Among them, the terminal involved in the embodiment of the present disclosure may be a device that provides voice and/or data connectivity to a user, a handheld device with a wireless connection function, or other processing devices connected to a wireless modem. In different systems, the name of the terminal device may also be different. For example, in a 5G system, the terminal device may be called a user equipment (User Equipment, UE). The wireless terminal device can communicate with one or more core networks (Core Network, CN) via a radio access network (Radio Access Network, RAN). The wireless terminal device can be a mobile terminal device, such as a mobile phone (or "cellular" phone) and a computer with a mobile terminal device. For example, it can be a portable, pocket, handheld, computer-built-in or vehicle-mounted mobile device that exchanges language and/or data with a wireless access network. For example, personal communication service (Personal Communication Service, PCS) phone, cordless phone, session initiation protocol (Session Initiated Protocol, SIP) phone, wireless local loop (Wireless Local Loop, WLL) station, personal digital assistant (Personal Digital Assistant, PDA), Redcap terminal and other devices. The wireless terminal device may also be referred to as a system, a subscriber unit, a subscriber station, a mobile station, a mobile station, a remote station, an access point, a remote terminal device, an access terminal device, a user terminal device, a user agent, and a user device, which is not limited in the embodiments of the present disclosure.

The satellites involved in the embodiments of the present disclosure may specifically include: non-geostationary orbit satellites (None Geographical Stationary Orbit, NGSO), geostationary orbit satellites (Geographical Stationary Orbit, GSO), low-orbit satellites (Low Earth Orbit, LEO), medium-orbit satellites (Medium Earth Orbit, MEO), geosynchronous orbit satellites (Geostationary Earth Orbit, GEO), high-orbit satellites, regeneration satellites, transparent forwarding satellites, etc.

Optionally, the above system also includes a ground gateway 13 and communication device 14, where the communication device 14 may include: a ground network controller, a satellite controller, a network operation and control center, a ground base station and other communication device.

Satellites and terminals can each use one or more antennas for multiple input multiple output (MIMO) transmission. MIMO transmission can be single user MIMO (SU-MIMO) or multi-user MIMO (MU-MIMO). Depending on the form and number of antenna combinations, MIMO transmission can be 2D-MIMO, 3D-MIMO, full- dimensional MIMO (FD -MIMO) or massive MIMO (massive-MIMO), or it can be diversity transmission, precoded transmission or beamforming transmission, etc.

Referring to Fig. 2, which is a flow chart of a satellite control method in an embodiment of the present disclosure. As shown in Fig. 2, the method includes the following steps:
201: obtaining, by a first satellite, interference avoidance notification information, where the interference avoidance notification information is interference avoidance notification information relative to a second satellite.
202: in a case that the first satellite enters or is about to enter an interference avoidance protection band of the second satellite, performing, by the first satellite, an interference avoidance operation according to the interference avoidance notification information, where the interference avoidance operation includes a beam management.

The interference avoidance notification information may be received from the ground, for example, interference avoidance notification information received through a ground gateway, but this is not limited to this. For example, in some embodiments or scenarios, the interference avoidance notification information may be generated by the first satellite through the ephemeris information of the second satellite, or may be interference avoidance notification information received from the second satellite or other satellites.

The above-mentioned interference avoidance notification information is used for the first satellite to perform interference avoidance operations. For example, the interference avoidance notification information includes the ephemeris information of the second satellite, so that the first satellite can perform related beam management based on the ephemeris information. For another example: the interference avoidance notification information includes beam management information, so that the first satellite can directly perform related beam management based on the beam management information.

The interference avoidance protection band may refer to a protection band that causes interference to the second satellite.

In the embodiment of the present disclosure, the above-mentioned beam management may be to control and manage the beam in the first satellite so as to reduce or eliminate the interference of the beam of the first satellite on the second satellite.

In the embodiment, the first satellite may be an NGSO, and the second satellite may be a GSO or an established satellite, or the first satellite may be a LEO, and the second satellite may be a GEO, a high-orbit satellite or an established satellite, or the first satellite may be a LEO, and the second satellite may be a MEO or an established satellite, etc. In addition, the first satellite may be a regenerative satellite or a transparent forwarding satellite.

In the embodiment, the above steps can be used to implement the interference avoidance operation based on the interference avoidance notification information, thereby reducing or eliminating the interference of the first satellite with respect to the second satellite. In addition, since the interference avoidance operation includes beam management, it is not necessary to shut down the first satellite, thereby saving the waste of resources of the first satellite.

It should be noted that reducing or eliminating the interference of the first satellite with respect to the second satellite can be understood as reducing or eliminating the interference of the first satellite with respect to the signal of the second satellite, or can be understood as reducing or eliminating the interference of the first satellite with respect to the terminal served by the second satellite.

As an optional embodiment, the interference avoidance notification information includes relevant information of the second satellite.

The relevant information of the second satellite includes but is not limited to at least one of the following:
ephemeris information of the second satellite;
coverage position information of the second satellite;
frequency information of the second satellite;
beam direction information of the second satellite;
a beam width of the second satellite.

In this embodiment, since the interference avoidance notification information includes relevant information of the second satellite, the first satellite can determine beam management information for interference avoidance for the second satellite based on the relevant information of the second satellite, and perform beam management based on the beam management information to reduce or eliminate interference of the first satellite with respect to the second satellite.

As an optional embodiment, the interference avoidance notification information includes beam management information.

The above-mentioned beam management information is the beam management information for the first satellite to avoid interference with the second satellite, and specifically can be the beam management information generated by the ground network controller, the network operation and control center or the ground base station based on the relevant information of the second satellite.

In this embodiment, since the interference avoidance notification information includes beam management information, the first satellite can directly perform beam management based on the beam management information to reduce the complexity of the first satellite.

Optionally, the beam management information includes at least one of the following:
beam scheduling information and beam steering information.

The above-mentioned beam scheduling information may be beam scheduling information used to reduce or eliminate interference of the first satellite with respect to the second satellite through beam scheduling.

The beam steering information may be beam scheduling information for reducing or eliminating interference of the first satellite with respect to the second satellite through beam steering.

In this embodiment, it is possible to reduce or eliminate the interference of the first satellite with respect to the second satellite through at least one of beam scheduling and beam steering.

As an optional embodiment, the obtaining, by the first satellite, the interference avoidance notification information through the ground gateway includes one of the following:
receiving, by the first satellite, the interference avoidance notification information sent by a ground network controller, through the ground gateway;
receiving, by the first satellite, the interference avoidance notification information sent by a network operation and control center, through the ground gateway; or
receiving, by the first satellite, the interference avoidance notification information sent by a ground base station, through the ground gateway.

Taking the ground network controller as an example, the ground network controller can pre-store the ephemeris information, beam width and frequency information of the second satellite (for example, a high- orbit satellite), and the ground network controller can calculate the position information of the second satellite at different times based on the ephemeris information of the second satellite. Among them, the satellite's position information may include beam center angle information or longitude, latitude and altitude information of the wave position. The beam width information may include a 3dB beam angle or a beam coverage range. The ground network controller can determine the interference avoidance protection band of the second satellite based on at least one of the second satellite's position information, beam width information and low-orbit satellite constellation information, and determine the time point when the first satellite (for example, a low-orbit satellite) enters the interference avoidance protection band and the duration of time in the interference avoidance protection band. In this way, the ground network controller can send the interference avoidance notification information to the first satellite (for example: a low-orbit satellite base station) or the satellite core network that is about to enter the interference avoidance protection band. For example, the ground network controller notifies the first satellite that is about to enter the interference protection band area of the time point when it enters the interference avoidance protection band and the length of time it is in the interference avoidance protection band, and can also notify the first satellite that is about to enter the interference avoidance protection band to notify the terminals under its low-orbit satellite beam to execute the interference avoidance strategy.

In one embodiment, the interference avoidance notification information sent by the ground network controller may include the ephemeris information, coverage location information and frequency information of the second satellite. The ground network controller modulates the interference avoidance notification information into a microwave signal that conforms to the feed link transmission through the ground gateway, and transmits it to the onboard feed link processor through the ground gateway via the uplink feed link. After the onboard feed link processor regenerates the feed uplink signal, it sends the regenerated information to the onboard processor, which generates beam scheduling information and beam steering information based on the interference avoidance information and ground user service requirements. The onboard processor sends the beam steering information to the beam steering unit of the phased array antenna to realize the weight calculation of each array element of the phased array antenna. The beam steering unit adjusts the direction of the beam, and implements interference avoidance through beam scheduling to complete the interference avoidance operation of the first satellite.

The embodiment methods of the above-mentioned satellite controller, network operation and control center and ground base station can refer to the embodiment methods of the above-mentioned ground network controller and will not be described in detail here.

In this embodiment, the first satellite can obtain the interference avoidance notification information through the ground gateway, so that the resources of the ground communication device can be used to implement the interference avoidance operation.

For example, there are many satellites in the low-orbit constellation system, which relies on inter-satellite link networking and on-board processing and switching, and the types of services are diverse, which greatly increases its complexity. The low-orbit satellite constellation introduces software-defined network technology (SDN), adopts a software-defined network architecture, and uses a logically centralized control plane to achieve more flexible management and configuration of the network, realize the separation of control and forwarding, and reduce the complexity of low-orbit satellite systems (especially on-board processing). The core of the SDN control plane can be a ground network controller. Since the low-orbit satellite network has a dynamic topological configuration, its inter-satellite link connection will change over time. The network controller requires a lot of computing power to support it. Generally, the network controller deploys the main and sub-controllers. The network controller can be deployed on the ground gateway node or the satellite node. Usually the main controller is deployed on the ground, and the main controller becomes the ground network controller. As the ground centralized controller of the space software-defined bearer network, the ground network controller's control plane work mainly reflects the following aspects: on the one hand, timely obtain the status information of each satellite node and link, so as to make decisions for the ground centralized management control and optimized scheduling; on the other hand, upload the control instructions obtained by the ground centralized calculation to each satellite node, including routing table entry, label exchange information entry, and other control plane instruction information entry, so as to realize the centralized management and optimization of service bearer. In this way, the complexity of the first satellite can be reduced through the ground network controller.

As an optional embodiment, the beam management includes the following:
beam scheduling and beam steering.

The above-mentioned beam scheduling may be a beam scheduling operation for reducing or eliminating interference of the first satellite with respect to the second satellite.

The above-mentioned beam steering may be a beam steering operation for reducing or eliminating interference of the first satellite with respect to the second satellite.

The above-mentioned beam scheduling and beam steering may be beam scheduling and beam steering determined by the first satellite based on relevant information of the second satellite. For example: the satellite base station of the first satellite generates a beam scheduling pattern according to the interference avoidance notification information, and in the area covered by the second satellite beam, does not schedule the low-orbit satellite co-frequency beam, or shuts down the low-orbit satellite beam, or reduces the power transmission, or changes the low-orbit satellite beam operating frequency, or the above-mentioned beam scheduling and beam steering may be beam scheduling and beam steering represented by the interference avoidance notification information including beam management information.

In this embodiment, it is able to reduce or eliminate the interference of the first satellite with respect to the second satellite through at least one of beam scheduling and beam steering.

Optionally, the beam scheduling includes:
not scheduling a first beam, where the first beam is a beam in the first satellite that satisfies at least one of the following:
frequency information matches the frequency information of the second satellite;
a coverage position matches a coverage position of the second satellite.

The matching of the frequency information and the frequency information of the second satellite may be that the frequency information is the same as or partially overlaps with the frequency information of the second satellite.

The matching of the above-mentioned coverage position with the coverage position of the second satellite may be that the coverage position is the same as the coverage position of the second satellite or there is a partial overlap.

In this embodiment, the interference of the first satellite with respect to the second satellite can be eliminated by not scheduling the first beam.

Optionally, the beam steering includes at least one of the following:
turning off a second beam;
reducing a beam transmission power;
changing an operating frequency of a third beam;
changing a coverage position of a fourth beam;
where the second beam is a beam of the first satellite that satisfies at least one of the following conditions:
frequency information matches the frequency information of the second satellite;
a coverage position matches a coverage position of the second satellite;
the third beam is a beam in the first satellite, whose frequency information matches the frequency information of the second satellite;
the fourth beam is a beam in the first satellite, whose coverage position matches the coverage position of the second satellite.

The reduction of the beam transmission power may be to reduce the transmission power of the beam in the first satellite that may interfere with the second satellite, for example, the first beam, the second beam, the third beam or the fourth beam. The reduction may be to reduce the transmission power to a lower preset power value, or to reduce the preset power amplitude, so as to reduce or eliminate the interference of the first satellite with respect to the second satellite.

The above-mentioned changing the operating frequency of the third beam may be to replace the third beam to a frequency different from the frequency of the second satellite, or to replace the third beam to a frequency with a smaller overlapping range with the frequency of the second satellite, that is, to reduce the frequency range in which the third beam overlaps with the second satellite.

The changing the coverage position of the fourth beam may be by changing the fourth beam to a frequency different from the coverage position of the second satellite, or by changing the fourth beam to a position with a smaller overlap with the coverage position of the second satellite, i.e., lowering the coverage position where the third beam overlaps with the second satellite.

In this embodiment, the interference of the first satellite with respect to the second satellite can be reduced or eliminated by at least one of shutting down the second beam, reducing the beam transmission power, changing the operating frequency of the third beam, and changing the coverage position of the fourth beam.

Optionally, the method further includes:
sending, by the first satellite, a notification message to a terminal, where the notification message is used by the terminal to perform a service switching.

The above-mentioned service switching may be that the above-mentioned terminal switches from the above-mentioned first satellite to other satellites to obtain services. For example: as shown in Figure 3, the first satellite is LEO or NGSO, and the second satellite is GSO. In this way, the second beam of the first satellite that overlaps with the second satellite and whose center line is on the same line can be turned off, and the beam of the adjacent satellite in the same orbit is used. By adjusting the beam center angle to cover the coverage area of the turned-off second beam, the interference of the GSO user to the low-orbit satellite will be reduced. The NGSO user learns the effective time and beam direction of the new beam assigned to it by the base station of the first satellite through the system message. The terminal adjusts the terminal antenna direction based on the beam direction information, and selects the beam or base station that can be connected to the adjacent satellite for access.

In some embodiments, the service switching may also be beam switching, for example, switching from the first beam or the second beam of the first satellite to other beams in the first satellite that do not interfere with the second satellite to obtain services.

In this embodiment, the terminal may perform service switching through the notification message to improve the service performance of the terminal.

For example, the ground network controller controls the beam scheduling pattern according to the frequency planning of the ground cellular network, closes the beam of the first satellite within the overlapping coverage range of the ground cellular network, or uses beams of different working frequency bands to avoid interference. Alternatively, a dedicated controller independent of the ground network controller (for example, a satellite controller) modulates the beam direction or geographical location and frequency information of the interference beam that needs to be avoided into a microwave signal that complies with the feed link transmission at the ground gateway, and transmits it to the onboard feed link processor through the ground gateway via the uplink feed link. After the onboard feed link processor regenerates the feed uplink signal, it sends the regenerated information to the onboard processor, which sends the beam steering information to the phased array antenna beam steering unit to calculate the weights of each element of the phased array antenna. The beam steering unit adjusts the direction of the beam, and avoids interference through beam scheduling. In terms of beam steering information, the satellite controller generates beam pointing geographic location information including beam longitude, latitude, and altitude information, and transmits it to the satellite through the ground gateway. The onboard processor sends the resolved beam steering information to the beam steering machine of the phased array antenna to realize weight calculation for beam scheduling and interference avoidance.

The satellite base station or gateway station notifies the terminal of the wave position or satellite elevation angle and time window where the beam may stop sending through a system message. At the same time, it notifies the low-orbit satellite user of the effective time and beam direction of the new beam allocated to it through a system message. Based on the network notification, the terminal adjusts the terminal antenna direction and selects other connectable beams or base stations for access.

Optionally, the notification message includes:
new beam information, used by the terminal to select a new beam to access.

The new beam information may be beam information of other satellites providing services for the terminal, or information of other beams in the first satellite that do not interfere with the second satellite.

In this embodiment, the new beam information enables the terminal to quickly select a new beam to access. It should be noted that the disclosure does not limit the notification message to include new beam information. For example, in some embodiments or scenarios, the notification message may only notify the terminal to perform service switching, and does not include new beam information. The terminal selects a new beam to access through detection.

Optionally, the new beam information includes at least one of the following:
an effective time of the new beam, a beam direction of the new beam, or frequency band information of the new beam.

In this embodiment, the terminal can quickly select the new beam to access through the effective time of the new beam, the beam pointing of the new beam, or the frequency band information of the new beam. It should be noted that in some embodiments or scenarios, the effective time of the new beam may not be notified, or the beam pointing of the new beam may be obtained by the terminal through measurement, which is not limited.

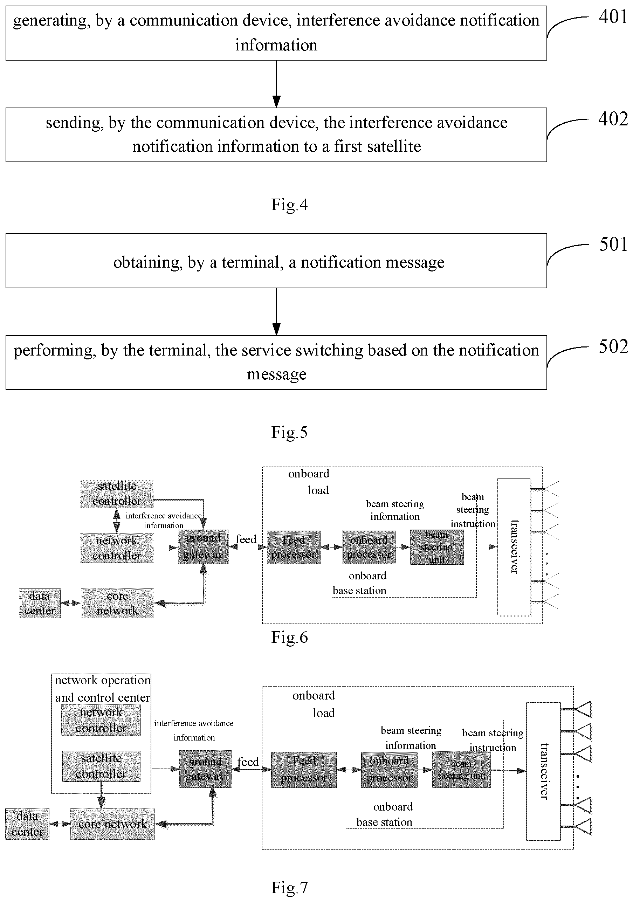

In an embodiment of the present disclosure, a first satellite obtains interference avoidance notification information, and the interference avoidance notification information is interference avoidance notification information relative to a second satellite; when the first satellite enters or is about to enter an interference avoidance protection band of the second satellite, the first satellite performs an interference avoidance operation according to the interference avoidance notification information, and the interference avoidance operation includes beam management. In this way, since the interference avoidance operation is performed based on the interference avoidance notification information, the interference of the first satellite relative to the second satellite can be reduced.
a flow chart of another satellite control method in an embodiment of the present disclosure. As shown in Fig. 4, the method includes the following steps:
401: generating, by a communication device, interference avoidance notification information, where the interference avoidance notification information is interference avoidance notification information relative to a second satellite;
402: sending, by the communication device, the interference avoidance notification information to a first satellite, where the first satellite is a satellite that enters or is about to enter an interference avoidance protection band of the second satellite.

The above-mentioned communication device may include: ground network controller, satellite controller, network operation and control center, ground base station and other communication device.

Optionally, the interference avoidance notification information includes relevant information of the second satellite.

Optionally, the relevant information of the second satellite includes at least one of the following:
ephemeris information of the second satellite;
coverage position information of the second satellite;
frequency information of the second satellite;
beam direction information of the second satellite; or
a beam width of the second satellite.

Optionally, the interference avoidance notification information includes beam management information.

Optionally, the beam management information includes at least one of the following:
beam scheduling information or beam steering information.

Optionally, the sending, by the communication device, the interference avoidance notification information to the first satellite includes:
sending, by the communication device, the interference avoidance notification information to the first satellite, through a ground gateway.

Optionally, the method further includes:
sending, by the communication device, a notification message to a terminal, where the notification message is used by the terminal to perform a service switching, and the terminal is a terminal associated with the first satellite.

Optionally, the notification message includes:
new beam information, used by the terminal to select a new beam to access.

Optionally, the new beam information includes at least one of the following:
an effective time of the new beam, a beam direction of the new beam, or frequency band information of the new beam.

Optionally, the method further includes:
sending, by the communication device, an interference assistance message to a third satellite, where the interference assistance message is used by the third satellite to adjust a beam angle to cover a coverage area of the first satellite.

The third satellite may be an adjacent satellite of the first satellite, for example, satellite 1 shown in Figure 3. The adjusting the beam angle to cover the coverage area of the first satellite may be to adjust the beam center angle or the incident angle to cover the coverage area of the first satellite.

In this embodiment, it is possible to reduce interference to the second satellite by utilizing the angle of the adjacent low-orbit satellite scheduling beam, thereby achieving the effect of reducing interference to GSO users.

In the embodiment, the satellite beams are spatially isolated, so that the spatial isolation between the beams can be used to reduce interference. In this way, when frequency resources are tight, the spatial isolation between the beams can be used to reduce interference to GSO users by using the incident angle of the adjacent low-orbit satellite scheduling beam.

In this embodiment, the interference avoidance notification information is sent to the first satellite through a communication device, so that when the first satellite enters or is about to enter the interference avoidance protection band of the second satellite, the first satellite performs an interference avoidance operation according to the interference avoidance notification information to reduce or eliminate interference to the second satellite.

It should be noted that this embodiment is an embodiment of the communication device corresponding to the embodiment shown in Figure 2. Its specific embodiment can refer to the relevant description of the embodiment shown in Figure 2. In order to avoid repeated description, this embodiment will not be repeated, and the same beneficial effects can be achieved.

Fig. 5 is a flow chart of a service switching method provided by the embodiment of the present disclosure. As shown in Fig. 5, the method includes the following steps:
501: obtaining, by a terminal, a notification message, where the notification message is used by the terminal to perform a service switching, where the terminal is associated with a first satellite, the first satellite is a satellite that enters or is about to enter an interference avoidance protection band of the second satellite
501: performing, by the terminal, the service switching based on the notification message.

Optionally, the notification message includes:
new beam information, used by the terminal to select a new beam to access;
the service switching includes:
selecting a new beam to access.

Optionally, the new beam information includes at least one of the following:
an effective time of the new beam, a beam direction of the new beam, or frequency band information of the new beam.

For example: based on interference avoidance requirements, the satellite base station notifies the terminal to switch the signal transmission mode in the area where interference avoidance is required, reduce the transmission power or adopt a low-power spread spectrum transmission mode to meet the interference avoidance requirements.

When the connection between the terminal and the satellite base station/ground base station is switched, the source satellite base station/ground base station obtains the beam information and frequency information of the adjacent satellite base station/satellite, and determines whether to switch the terminal to the adjacent satellite base station/satellite according to the interference avoidance information uploaded by the ground network controller or the satellite controller;

Alternatively, when the connection between the terminal and the satellite base station/ground base station is switched, the ground network controller (NCF) needs to notify the ground core network of the interference avoidance information, and the core network then injects the interference information to the satellite base station through the ground gateway, or the core network notifies the ground base station of the interference information, and the satellite base station/ground base station/gateway station sends the user switching message to the core network, and the core network designates an adjacent satellite base station/satellite to complete the service switching of the user based on the interference information and the coverage range and frequency allocation information of the adjacent satellite.

The ground gateway can be used as an intermediate node between the core network and the satellite or onboard base station for data transmission. In order to efficiently and completely realize the above-mentioned segmented carrying from satellite to ground and ground to satellite, the network controller and the satellite controller can cooperate effectively. In specific embodiment, the network controller and the satellite controller can be integrated into a unified network operation and control center, which has the functions of satellite constellation operation and control, efficient calculation, path planning and beam steering commands.

In this embodiment, the terminal performs service switching based on the notification message, which can improve the service performance of the terminal.

It should be noted that this embodiment is an embodiment of the terminal corresponding to the embodiment shown in Figure 2. Its specific embodiment can refer to the relevant description of the embodiment shown in Figure 2. In order to avoid repeated description, this embodiment will not be repeated, and the same beneficial effects can be achieved.

The method provided by the present disclosure is illustrated below by means of multiple embodiments:

### Embodiment 1:

In this embodiment, beam management scheduling is performed by a network controller and a satellite controller as an example. Referring to Fig. 6, the specific method may be as follows:
The satellite controller is responsible for the operation and planning of the constellation, including the broadcasting of ephemeris information and beam pointing control. The satellite controller stores or obtains ground network frequency planning information from the ground network, stores high-orbit satellite ephemeris information, stores low-orbit satellite network ephemeris information, and is responsible for calculating the real-time position information of high-orbit and low-orbit satellites or satellites in the entire network. As the ground centralized controller of the space software-defined bearer network, the network controller is responsible for the routing and forwarding functions, providing the satellite controller with routing information for information transmission. The satellite controller provides the network controller with constellation operation and control information, and provides input for the network controller to complete the ground centralized network topology control. A dedicated satellite controller independent of the ground network controller calculates the ephemeris information of high-orbit satellites and low-orbit satellites, obtains the interference of low-orbit satellites in the high-orbit satellite coverage area, calculates the direction of the interference beam based on the ephemeris information, and notifies the on-board payload of the beam direction information or geographic location and frequency information that needs to be avoided. The direction information of the interference beam includes the directional angle and beam width of the beam center, or is indicated by longitude, latitude and altitude. The interference avoidance information is modulated into a microwave signal that conforms to the transmission of the feeder link at the ground gateway, and is transmitted to the satellite processor via the uplink feeder link through the ground gateway according to the routing information provided by the network controller. The satellite processor generates beam scheduling information and beam steering information based on the user's service needs and interference avoidance information. The beam scheduling information is the residence time of the beam at different wave positions, and the beam steering information is the specific control information for the beam pointing corresponding to the beam scheduling information. The beam steering unit sends the beam steering information to the transceiver component of the phased array antenna, and the beam pointing controller adjusts the beam pointing to achieve interference avoidance.

At the same time, the satellite base station notifies the terminal through system messages of the wave position or satellite elevation angle and time window where the beam may stop transmitting. The terminal selects other connectable beams or base stations for access based on the network notification. Based on the interference avoidance requirements, the satellite base station notifies the terminal to switch the signal transmission mode in the interference avoidance area, reduce the transmission power or use the low-power spread spectrum transmission mode to meet the interference avoidance requirements.

When the connection between the terminal and the satellite base station is switched, the source satellite base station obtains the beam information and frequency information of the adjacent satellite base station, and determines whether to switch the terminal to the adjacent satellite base station based on the interference avoidance information uploaded by the ground network controller or the satellite controller.

### Embodiment 2:

This embodiment is described by taking beam management and scheduling performed by a network operation and control center as an example. Referring to Fig. 7, the specific method may be as follows:
The network operation and control center is a super network control center with super computing capabilities that integrates constellation operation, routing and forwarding. The network operation and control center stores or obtains ground network frequency planning information from the ground network, stores high-orbit satellite ephemeris information, and stores low-orbit satellite network ephemeris information. The satellite controller is responsible for the operation and planning of the constellation, including the broadcasting of ephemeris information and beam pointing control. The network operation and control center has super computing capabilities, calculates the ephemeris information of high-orbit satellites and low-orbit satellites, calculates the interference of low-orbit satellites in the area covered by high-orbit satellites, calculates the direction of the interference beam based on the ephemeris information, and notifies the onboard payload of the beam direction information or geographic location and frequency information that needs to be avoided. The direction information of the interference beam includes the directional angle and beam width of the beam center, or is indicated by longitude, latitude and altitude. The interference avoidance information is modulated into a microwave signal that meets the transmission of the feeder link at the ground gateway, and is transmitted to the onboard processor through the uplink feeder link through the ground gateway based on the routing information calculated by the network operation and control center. The onboard processor generates beam scheduling information and beam steering information based on the user's service needs and interference avoidance information. The beam scheduling information is the dwell time of the beam at different wave positions, and the beam steering information is the specific control information for the beam pointing corresponding to the beam scheduling information. The beam steering unit sends the beam steering information to the transceiver component of the phased array antenna, and the beam pointing controller adjusts the beam pointing to achieve interference avoidance.

At the same time, the satellite base station notifies the terminal through system messages of the wave position or satellite elevation angle and time window where the beam may stop transmitting. The terminal selects other connectable beams or base stations for access based on the network notification. Based on the interference avoidance requirements, the satellite base station notifies the terminal to switch the signal transmission mode in the interference avoidance area, reduce the transmission power or use the low-power spread spectrum transmission mode to meet the interference avoidance requirements.

When the connection between the terminal and the satellite base station is switched, the source satellite base station obtains the beam information and frequency information of the adjacent satellite base station, and determines whether to switch the terminal to the adjacent satellite base station based on the interference avoidance information uploaded by the ground network controller or the satellite controller.

### Embodiment 3:

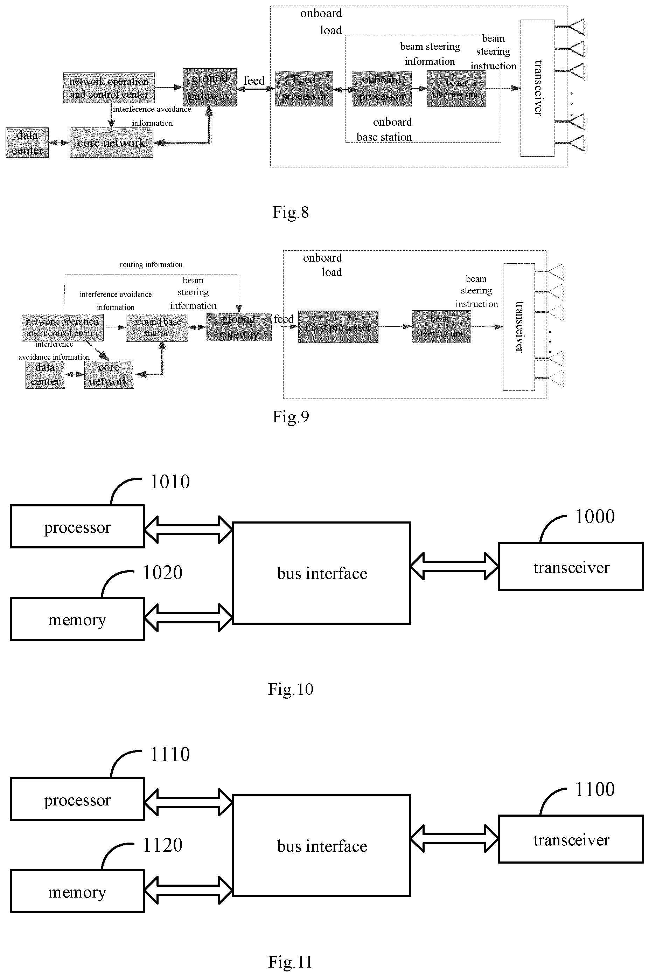

This embodiment is described by taking beam management scheduling performed by a network controller as an example. Referring to Fig. 8, the specific method may be as follows:
The network operation and control center is a super network control center with super computing capabilities that integrates constellation operation, routing and forwarding. It pre-stores or obtains ground network frequency planning information from the ground network, pre-stores high-orbit satellite ephemeris information, and pre-stores low-orbit satellite network ephemeris information. The satellite controller is responsible for the operation and planning of the constellation, including the broadcasting of ephemeris information and beam pointing control. The network operation and control center has super computing capabilities, calculates the ephemeris information of high-orbit satellites and low-orbit satellites, calculates the interference of low-orbit satellites in the area covered by high-orbit satellites, calculates the direction of the interference beam based on the ephemeris information, and notifies the on-board payload of the beam direction information or geographic location and frequency information that needs to be avoided. The direction information of the interference beam includes the directional angle and beam width of the beam center, or is indicated by longitude, latitude and altitude. The interference avoidance information is modulated into a microwave signal that meets the transmission of the feeder link at the ground gateway, and is transmitted to the on-board processor through the uplink feeder link through the ground gateway according to the routing information calculated by the network operation and control center. The onboard processor generates beam scheduling information and beam steering information based on the user's service needs and interference avoidance information. The beam scheduling information is the dwell time of the beam at different wave positions, and the beam steering information is the specific control information for the beam pointing corresponding to the beam scheduling information. The beam steering unit sends the beam steering information to the transceiver component of the phased array antenna, and the beam pointing controller adjusts the beam pointing to achieve interference avoidance.

At the same time, the satellite base station notifies the terminal through system messages of the wave position or satellite elevation angle and time window where the beam may stop transmitting. The terminal selects other connectable beams or base stations for access based on the network notification. Based on the interference avoidance requirements, the satellite base station notifies the terminal to switch the signal transmission mode in the interference avoidance area, reduce the transmission power or use the low-power spread spectrum transmission mode to meet the interference avoidance requirements.

When the connection between the terminal and the satellite base station switches, the network operation and control center notifies the ground core network of the interference avoidance information. The core network then injects the interference information to the satellite base station through the ground gateway. The satellite base station sends the user switching message to the core network. The core network designates an adjacent satellite base station to complete the service switching of the user based on the interference information and the coverage and frequency allocation information of the adjacent satellite.

### Embodiment 4:

This embodiment is described by taking the beam management of the transparent forwarding satellite of the network operation and control center as an example. Referring to Fig. 9, the specific method may be as follows:
The network operation and control center calculates the location information of high-orbit satellites and low-orbit satellites in real time by pre-storing or obtaining ground network frequency planning information from the ground network, calculates the interference of low-orbit satellites in the area covered by high-orbit satellites, calculates the direction of the interference beam based on the ephemeris information, and notifies the onboard payload of the beam direction information or geographic location and frequency information that needs to be avoided. The direction information of the interference beam includes the directional angle and beam width of the beam center, or is indicated by longitude, latitude and altitude. The network operation and control center notifies the ground base station or the signal gateway of the interference avoidance information, or notifies the core network of the interference avoidance information. The ground base station combines the user's service needs and the interference avoidance information to form beam scheduling information and beam steering information, and modulates the beam steering information into a microwave signal that meets the transmission of the feeder link at the ground gateway. According to the routing information calculated by the network operation and control center, it is transmitted to the feed processor through the ground gateway via the uplink feeder link. The feed processor parses the beam steering information, and the beam steering unit sends the beam steering information to the transceiver component of the phased array antenna. The beam pointing controller adjusts the direction of the beam to achieve interference avoidance.

At the same time, the ground base station notifies the terminal through system messages of the wave position or satellite elevation angle and time window where the beam may stop transmitting. The terminal selects other connectable beams or base stations for access based on the network notification. Based on the interference avoidance requirements, the ground base station notifies the terminal to switch the signal transmission mode in the interference avoidance area, reduce the transmission power or use the low-power spread spectrum transmission mode to meet the interference avoidance requirements.

When the connection between the terminal and the ground base station switches, the network operation and control center notifies the ground core network of the interference avoidance information. The core network then sends the interference information to the ground base station. The ground base station sends the user switching message to the core network. The core network designates an adjacent satellite base station to complete the service switching of the user based on the interference information and the coverage range and frequency allocation information of the adjacent satellite.
The embodiments of the present disclosure can be implemented as follows:
The ground network controller or satellite controller notifies the satellite base station or core network of the information that the high-orbit system needs to avoid interference, and the satellite base station executes the beam steering and switching strategy based on the interference avoidance information;
The ground network controller determines the interference avoidance protection area according to the high-orbit satellite position information, beam width information and low-orbit satellite constellation information, and determines the time point when the low-orbit satellite enters the interference avoidance protection area and the duration of time in the interference avoidance protection area;
The ground network controller or the satellite controller notifies the satellite base station of the beam direction or geographical location that needs to be avoided;
The satellite base station which is about to enter the interference avoidance area notifies the terminal through a system message of the wave position or time window or satellite elevation angle at which the beam may stop sending. The terminal selects other connectable beams or satellite base stations for access based on the network notification;
When the connection between the terminal and the satellite base station is switched, the source satellite base station obtains the beam information and frequency information of the adjacent satellite, and determines whether to switch the terminal to the adjacent satellite according to the interference avoidance information uploaded by the ground network controller or the satellite controller;
When the connection between the terminal and the satellite base station/ground base station is switched, the ground network controller notifies the core network of the interference avoidance information, and the satellite base station/ground base station sends the user switching message to the core network, which then designates an adjacent satellite to complete the service switching for the user.

Based on the interference avoidance requirements, the satellite base station/ground base station notifies the terminal to switch the signal transmission mode in the area where interference avoidance is required, reduce the transmission power or adopt a low-power spread spectrum transmission mode to meet the interference avoidance needs.

The disclosed embodiment can calculate the position information of high-orbit synchronous satellites and low-orbit satellites in real time based on the ephemeris information of high-orbit synchronous satellites or existing satellites through the network operation and control system, and can solve the problem of how the NGSO system can self-identify its interference area with the GSO system or the existing satellite system, so as to solve the problem of interference avoidance based on the interference area and the flexible directionality of beam hopping. The disclosed embodiment can be applicable to the NGSO system with non-fixed beams, and can not only avoid the interference of the NGSO satellite system with the GSO system in the existing equatorial plane, but also can be more widely used for the NGSO satellite system to avoid any other existing satellite system that needs to be interfered with, so as to achieve unconditional interference protection measures for the NGSO satellite system with the GSO satellite and the existing satellite system.

Please refer to Fig. 10, which is a structural view of a satellite in an embodiment of the present disclosure. The satellite is a first satellite, as shown in Fig. 10, and includes a memory 1020, a transceiver 1000, and a processor 1010:
the memory 1020 is configured to store a computer program; a transceiver 1000 is configured to send and receive data under a control of the processor 1010; and the processor 1010 is configured to read the computer program in the memory 1020 to perform:
obtaining interference avoidance notification information, where the interference avoidance notification information is interference avoidance notification information relative to a second satellite;
in a case that the first satellite enters or is about to enter an interference avoidance protection band of the second satellite, performing an interference avoidance operation according to the interference avoidance notification information, where the interference avoidance operation includes a beam management.

In Fig. 10, the bus architecture may include any number of interconnected buses and bridges, specifically various circuits of one or more processors represented by processor 1010 and memory represented by memory 1020 are linked together. The bus architecture may also link together various other circuits such as peripherals, voltage regulators, and power management circuits, which are well known in the art and are therefore not further described herein. The bus interface provides an interface. The transceiver 1000 may be a plurality of components, namely, a transmitter and a receiver, providing a unit for communicating with various other devices on a transmission medium, which transmission medium includes transmission media such as wireless channels, wired channels, optical cables, and the like.

The processor 1010 is responsible for managing the bus architecture and general processing, and the memory 1020 can store data used by the processor 1000 when performing operations.

Optionally, the processor 1010 may be a central processing unit (CPU), an application specific integrated circuit (ASIC), a field programmable gate array (FPGA) or a complex programmable logic device (CPLD), and the processor may also adopt a multi-core architecture.

The processor calls the computer program stored in the memory to execute any of the methods provided by the embodiments of the present disclosure according to the obtained executable instructions. The processor and the memory can also be arranged physically separately.

Optionally, the interference avoidance notification information includes relevant information of the second satellite.

Optionally, the relevant information of the second satellite includes at least one of the following:
ephemeris information of the second satellite;
coverage position information of the second satellite;
frequency information of the second satellite;
beam direction information of the second satellite; or
a beam width of the second satellite.

Optionally, the interference avoidance notification information includes beam management information.

Optionally, the beam management information includes at least one of the following:
beam scheduling information or beam steering information.

Optionally, the obtaining the interference avoidance notification information includes:
obtaining, by the first satellite, the interference avoidance notification information through a ground gateway.

Optionally, the obtaining, by the first satellite, the interference avoidance notification information through the ground gateway includes one of the following:
receiving, by the first satellite, the interference avoidance notification information sent by a ground network controller, through the ground gateway;
receiving, by the first satellite, the interference avoidance notification information sent by a satellite controller, through the ground gateway;
receiving, by the first satellite, the interference avoidance notification information sent by a network operation and control center, through the ground gateway; or
receiving, by the first satellite, the interference avoidance notification information sent by a ground base station, through the ground gateway.

Optionally, the beam management includes one of the following conditions:
beam scheduling and beam steering.

Optionally, the beam scheduling includes:
not scheduling a first beam, where the first beam is a beam in the first satellite that satisfies at least one of the following:
frequency information matches the frequency information of the second satellite;
a coverage position matches a coverage position of the second satellite;
   and/or
the beam steering includes at least one of the following:
turning off a second beam;
reducing a beam transmission power;
changing an operating frequency of a third beam;
changing a coverage position of a fourth beam;
where the second beam is a beam of the first satellite that satisfies at least one of the following conditions:
   frequency information matches the frequency information of the second satellite;
   a coverage position matches a coverage position of the second satellite;
   the third beam is a beam in the first satellite, whose frequency information matches the frequency information of the second satellite;
   the fourth beam is a beam in the first satellite, whose coverage position matches the coverage position of the second satellite.

Optionally, the processor 1010 is configured to perform:
sending a notification message to a terminal, where the notification message is used by the terminal to perform a service switching.

Optionally, the notification message includes:
new beam information, used by the terminal to select a new beam to access.

Optionally, the new beam information includes at least one of the following:
an effective time of the new beam, a beam direction of the new beam, or frequency band information of the new beam.

It should be noted here that the above-mentioned satellite provided in the embodiment of the present disclosure can implement all the method steps implemented in the above-mentioned method embodiment, and can achieve the same technical effect. The parts and beneficial effects of this embodiment that are the same as those in the method embodiment will not be described in detail here.

Please refer to Fig. 11, which is a structural view of a communication device in an embodiment of the present disclosure. As shown in Fig. 11, the communication device includes a memory 1120, a transceiver 1100, and a processor 1110:
the memory 1120 is configured to store a computer program; a transceiver 1100 is configured to send and receive data under a control of the processor 1110; and the processor 1110 is configured to read the computer program in the memory 1120 to perform:
generating interference avoidance notification information, where the interference avoidance notification information is interference avoidance notification information relative to a second satellite;
sending the interference avoidance notification information to a first satellite, where the first satellite is a satellite that enters or is about to enter an interference avoidance protection band of the second satellite.

In Figure 11, the bus architecture can include any number of interconnected buses and bridges, specifically one or more processors represented by processor 1110 and various circuits of memory represented by memory 1120 are linked together. The bus architecture can also link various other circuits such as peripheral devices, voltage regulators, and power management circuits together, which are all well known in the art, so they are not further described herein. The bus interface provides an interface. The transceiver 1100 can be a plurality of components, that is, including a transmitter and a receiver, providing a unit for communicating with various other devices on a transmission medium, and these transmission media include transmission media such as wireless channels, wired channels, and optical cables. The processor 1110 is responsible for managing the bus architecture and general processing, and the memory 1120 can store data used by the processor 1100 when performing operations.

Optionally, the processor 1110 may be a central processing unit (CPU), an application specific integrated circuit (ASIC), a field programmable gate array (FPGA) or a complex programmable logic device (CPLD), and the processor may also adopt a multi-core architecture.

The processor calls the computer program stored in the memory to execute any of the methods provided by the embodiments of the present disclosure according to the obtained executable instructions. The processor and the memory may also be arranged physically separately.

Optionally, the interference avoidance notification information includes relevant information of the second satellite.

Optionally, the relevant information of the second satellite includes at least one of the following:
ephemeris information of the second satellite;
coverage position information of the second satellite;
frequency information of the second satellite;
beam direction information of the second satellite; or
a beam width of the second satellite.

Optionally, the interference avoidance notification information includes beam management information.

Optionally, the beam management information includes at least one of the following:
beam scheduling information or beam steering information.

Optionally, the sending, by the communication device, the interference avoidance notification information to the first satellite includes:
sending, by the communication device, the interference avoidance notification information to the first satellite, through a ground gateway.

Optionally, the processor 1110 is further configured to perform:
sending a notification message to a terminal, where the notification message is used by the terminal to perform a service switching, and the terminal is a terminal associated with the first satellite.

Optionally, the notification message includes:
new beam information, used by the terminal to select a new beam to access.

Optionally, the new beam information includes at least one of the following:
an effective time of the new beam, a beam direction of the new beam, or frequency band information of the new beam.

Optionally, the processor 1110 is further configured to perform:
sending an interference assistance message to a third satellite, where the interference assistance message is used by the third satellite to adjust a beam angle to cover a coverage area of the first satellite.

It should be noted here that the above-mentioned communication device provided in the embodiment of the present disclosure can implement all the method steps implemented in the above-mentioned method embodiment, and can achieve the same technical effect. The parts and beneficial effects of this embodiment that are the same as the method embodiment will not be described in detail here.

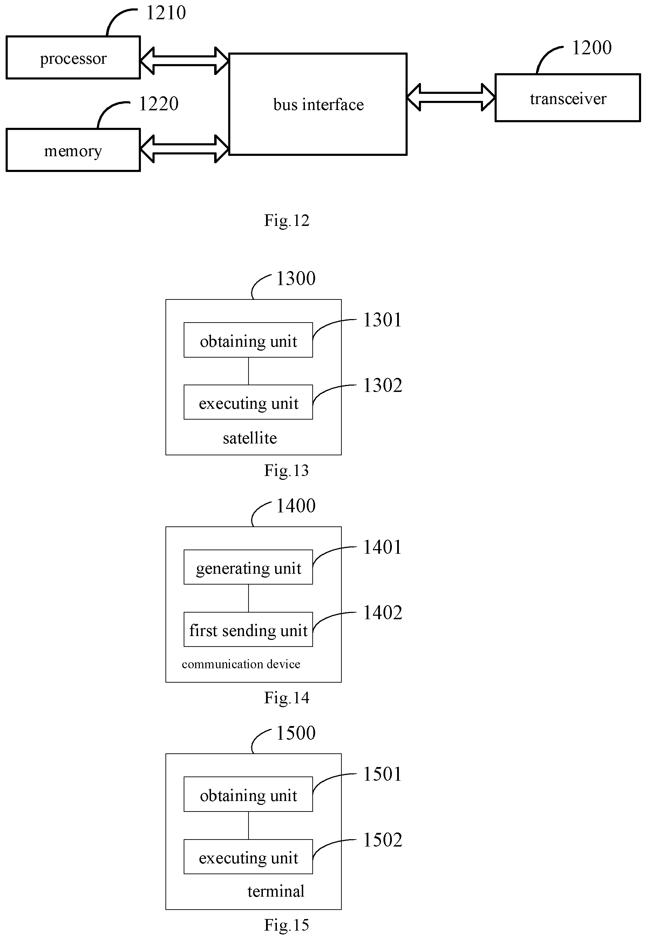

Please refer to Fig. 12, which is a structural view of a terminal in an embodiment of the present disclosure. As shown in Fig. 12, the terminal includes a memory 1220, a transceiver 1200, and a processor 1210:
the memory 1220 is configured to store a computer program; a transceiver 1200 is configured to send and receive data under a control of the processor 1210; and the processor 1210 is configured to read the computer program in the memory 1220 to perform:
obtaining a notification message, where the notification message is used by the terminal to perform a service switching, where the terminal is associated with a first satellite, the first satellite is a satellite that enters or is about to enter an interference avoidance protection band of the second satellite;
performing the service switching based on the notification message.

In Fig. 12, the bus architecture may include any number of interconnected buses and bridges, specifically one or more processors represented by processor 1210 and various circuits of memory represented by memory 1220 are linked together. The bus architecture may also link together various other circuits such as peripherals, voltage regulators, and power management circuits, which are well known in the art and are therefore not further described herein. The bus interface provides an interface. The transceiver 1200 may be a plurality of components, including a transmitter and a receiver, providing a unit for communicating with various other devices on a transmission medium, including transmission media such as wireless channels, wired channels, optical cables, and the like.

The processor 1210 is responsible for managing the bus architecture and general processing, and the memory 1220 can store data used by the processor 1200 when performing operations.

Optionally, the processor 1210 may be a central processing unit (CPU), an application specific integrated circuit (ASIC), a field programmable gate array (FPGA) or a complex programmable logic device (CPLD), and the processor may also adopt a multi-core architecture.

The processor calls the computer program stored in the memory to execute any of the methods provided by the embodiments of the present disclosure according to the obtained executable instructions. The processor and the memory can also be arranged physically separately.

Optionally, the notification message includes:
new beam information, used by the terminal to select a new beam to access;
the service switching includes:
   selecting a new beam to access.

Optionally, the new beam information includes at least one of the following:
an effective time of the new beam, a beam direction of the new beam, or frequency band information of the new beam.

It should be noted here that the above-mentioned terminal provided in the embodiment of the present disclosure can implement all the method steps implemented in the above-mentioned method embodiment and can achieve the same technical effect. The parts and beneficial effects of this embodiment that are the same as those in the method embodiment will not be described in detail here.

Please refer to Fig. 13, which is a structural view of another satellite in an embodiment of the present disclosure. The satellite is a first satellite. As shown in Fig. 13, a satellite 1300 includes:
an obtaining unit 1301, configured to obtain interference avoidance notification information, where the interference avoidance notification information is interference avoidance notification information relative to a second satellite;
an executing unit 1302, configured to, in a case that the first satellite enters or is about to enter an interference avoidance protection band of the second satellite, perform an interference avoidance operation according to the interference avoidance notification information, where the interference avoidance operation includes a beam management.

Optionally, the interference avoidance notification information includes relevant information of the second satellite.

Optionally, the relevant information of the second satellite includes at least one of the following:
ephemeris information of the second satellite;
coverage position information of the second satellite;
frequency information of the second satellite;
beam direction information of the second satellite; or
a beam width of the second satellite.

Optionally, the interference avoidance notification information includes beam management information.

Optionally, the beam management information includes at least one of the following:
beam scheduling information or beam steering information.

Optionally, the obtaining the interference avoidance notification information includes:
obtaining, by the first satellite, the interference avoidance notification information through a ground gateway.

Optionally, the obtaining, by the first satellite, the interference avoidance notification information through the ground gateway includes one of the following:
receiving, by the first satellite, the interference avoidance notification information sent by a ground network controller, through the ground gateway;
receiving, by the first satellite, the interference avoidance notification information sent by a satellite controller, through the ground gateway;
receiving, by the first satellite, the interference avoidance notification information sent by a network operation and control center, through the ground gateway; or
receiving, by the first satellite, the interference avoidance notification information sent by a ground base station, through the ground gateway.

Optionally, the beam management includes one of the following conditions:
beam scheduling and beam steering.

Optionally, the beam scheduling includes:
not scheduling a first beam, where the first beam is a beam in the first satellite that satisfies at least one of the following:
frequency information matches the frequency information of the second satellite;
a coverage position matches a coverage position of the second satellite;
   and/or
the beam steering includes at least one of the following:
turning off a second beam;
reducing a beam transmission power;
changing an operating frequency of a third beam;
changing a coverage position of a fourth beam;
where the second beam is a beam of the first satellite that satisfies at least one of the following conditions:
   frequency information matches the frequency information of the second satellite;
   a coverage position matches a coverage position of the second satellite;
   the third beam is a beam in the first satellite, whose frequency information matches the frequency information of the second satellite;
   the fourth beam is a beam in the first satellite, whose coverage position matches the coverage position of the second satellite.

Optionally, the satellite 1300 further includes:
a first sending unit, configured to send a notification message to a terminal, where the notification message is used by the terminal to perform a service switching.

Optionally, the notification message includes:
new beam information, used by the terminal to select a new beam to access.

Optionally, the new beam information includes at least one of the following:
an effective time of the new beam, a beam direction of the new beam, or frequency band information of the new beam.

It should be noted here that the above-mentioned satellite provided in the embodiment of the present disclosure can implement all the method steps implemented in the above-mentioned method embodiment, and can achieve the same technical effect. The parts and beneficial effects of this embodiment that are the same as those in the method embodiment will not be described in detail here.

Please refer to Fig. 14, which is a structural view of another communication device in an embodiment of the present disclosure. As shown in Fig. 14, the communication device 1400 includes:
a generating unit 1401, configured to generate interference avoidance notification information, where the interference avoidance notification information is interference avoidance notification information relative to a second satellite;
a first sending unit 1402, configured to send the interference avoidance notification information to a first satellite, where the first satellite is a satellite that enters or is about to enter an interference avoidance protection band of the second satellite.

Optionally, the interference avoidance notification information includes relevant information of the second satellite.

Optionally, the relevant information of the second satellite includes at least one of the following:
ephemeris information of the second satellite;
coverage position information of the second satellite;
frequency information of the second satellite;
beam direction information of the second satellite; or
a beam width of the second satellite.

Optionally, the interference avoidance notification information includes beam management information.

Optionally, the beam management information includes at least one of the following:
beam scheduling information or beam steering information.

Optionally, the sending, by the communication device, the interference avoidance notification information to the first satellite includes:
sending, by the communication device, the interference avoidance notification information to the first satellite, through a ground gateway.

Optionally, the communication device 1400 further includes:
a second sending unit, configured to send a notification message to a terminal, where the notification message is used by the terminal to perform a service switching, and the terminal is a terminal associated with the first satellite.

Optionally, the notification message includes:
new beam information, used by the terminal to select a new beam to access.

Optionally, the new beam information includes at least one of the following:
an effective time of the new beam, a beam direction of the new beam, or frequency band information of the new beam.

Optionally, the communication device 1400 further includes:
a third sending unit, configured to send an interference assistance message to a third satellite, where the interference assistance message is used by the third satellite to adjust a beam angle to cover a coverage area of the first satellite.

It should be noted here that the above-mentioned communication device provided in the embodiment of the present disclosure can implement all the method steps implemented in the above-mentioned method embodiment, and can achieve the same technical effect. The parts and beneficial effects of this embodiment that are the same as the method embodiment will not be described in detail here.

Please refer to Fig. 15, which is a structural view of another terminal in an embodiment of the present disclosure. As shown in Fig. 13, the terminal 1500 includes:
an obtaining unit 1501, configured to obtain a notification message, where the notification message is used by the terminal to perform a service switching, where the terminal is associated with a first satellite, the first satellite is a satellite that enters or is about to enter an interference avoidance protection band of the second satellite;
an executing unit 1502, configured to perform the service switching based on the notification message.

Optionally, the notification message includes:
new beam information, used by the terminal to select a new beam to access;
the service switching includes:
   selecting a new beam to access.

Optionally, the new beam information includes at least one of the following:
an effective time of the new beam, a beam direction of the new beam, or frequency band information of the new beam.

It should be noted here that the above-mentioned terminal provided in the embodiment of the present disclosure can implement all the method steps implemented in the above-mentioned method embodiment and can achieve the same technical effect. The parts and beneficial effects of this embodiment that are the same as those in the method embodiment will not be described in detail here.

It should be noted that the division of units in the embodiments of the present disclosure is schematic and is only a logical function division. There may be other division methods in actual embodiment. In addition, each functional unit in each embodiment of the present disclosure may be integrated into a processing unit, or each unit may exist physically separately, or two or more units may be integrated into one unit. The above-mentioned integrated unit may be implemented in the form of hardware or in the form of software functional units.

If the integrated unit is implemented in the form of a software functional unit and sold or used as an independent product, it can be stored in a processor- readable storage medium. Based on this understanding, the technical solution of the present disclosure is essentially or the part that contributes to the relevant technology or all or part of the technical solution can be embodied in the form of a software product. The computer software product is stored in a storage medium, including several instructions to enable a computer device (which can be a personal computer, server, or network device, etc.) or a processor to perform all or part of the steps of the method described in each embodiment of the present disclosure. The aforementioned storage medium includes: U disk, mobile hard disk, read-only memory (Read-Only Memory, ROM), random access memory (Random Access Memory, RAM), disk or optical disk and other media that can store program codes.

An embodiment of the present disclosure provides a processor-readable storage medium, where the processor-readable storage medium stores a computer program, where the computer program is used to enable the processor to execute the satellite control method on the first satellite side provided by the embodiment of the present disclosure, or the computer program is used to enable the processor to execute the satellite control method on the second satellite side provided by the embodiment of the present disclosure, or the computer program is used to enable the processor to execute the service switching method provided by the embodiment of the present disclosure.

The processor-readable storage medium may be any available medium or data storage device that can be accessed by the processor, including but not limited to magnetic storage (e.g., floppy disk, hard disk, magnetic tape, magneto- optical disk (MO), etc.), optical storage (e.g., compact disc (CD), digital video disc (DVD), Blu-ray Disc (BD), high-definition versatile disc (HVD), etc.), and semiconductor storage (e.g., ROM, Electrical Programmable Read Only Memory (EPROM), Electrically Erasable Programmable Read Only Memory (EEPROM), non - volatile memory (NAND Flash), solid-state disk (SSD)), etc.

Those skilled in the art will appreciate that the embodiments of the present disclosure may be provided as methods, systems, or computer program products. Therefore, the present disclosure may take the form of a complete hardware embodiment, a complete software embodiment, or an embodiment combining software and hardware. Furthermore, the present disclosure may take the form of a computer program product implemented on one or more computer-usable storage media (including but not limited to disk storage and optical storage, etc.) containing computer-usable program codes.

The present disclosure is described with reference to the flowcharts and/or block diagrams of the methods, devices (systems), and computer program products according to the embodiments of the present disclosure. It should be understood that each process and/or box in the flowchart and/or block diagram, as well as the combination of the processes and/or boxes in the flowchart and/or block diagram, can be implemented by computer executable instructions. These computer executable instructions can be provided to a processor of a general-purpose computer, a special-purpose computer, an embedded processor, or other programmable data processing device to produce a machine, so that the instructions executed by the processor of the computer or other programmable data processing device produce a device for implementing the functions specified in one process or multiple processes in the flowchart and/or one box or multiple boxes in the block diagram.

These processor-executable instructions may also be stored in a processor-readable memory that can direct a computer or other programmable data processing device to operate in a specific manner, so that the instructions stored in the processor-readable memory produce a product including an instruction device that implements the functions specified in one or more processes in the flowchart and/or one or more boxes in the block diagram.

These processor-executable instructions may also be loaded onto a computer or other programmable data processing device so that a series of operational steps are executed on the computer or other programmable device to produce a computer-implemented process, whereby the instructions executed on the computer or other programmable device provide steps for implementing the functions specified in one or more flows in the flowchart and/or one or more blocks in the block diagram.

It should be noted that it should be understood that the division of the above modules is only a division of logical functions. In actual embodiment, they can be fully or partially integrated into one physical entity, or they can be physically separated. And these modules can all be implemented in the form of software called by processing elements; they can also be all implemented in the form of hardware; some modules can also be implemented in the form of software called by processing elements, and some modules can be implemented in the form of hardware. For example, the determination module can be a separately established processing element, or it can be integrated in a chip of the above-mentioned device. In addition, it can also be stored in the memory of the above-mentioned device in the form of program code, and called and executed by a processing element of the above-mentioned device. The embodiment of other modules is similar. In addition, these modules can be fully or partially integrated together, or they can be implemented independently. The processing element described here can be an integrated circuit with signal processing capabilities. In the embodiment process, each step of the above method or each module above can be completed by an integrated logic circuit of hardware in the processor element or instructions in the form of software.

For example, each module, unit, sub-unit or sub-module may be one or more integrated circuits configured to implement the above method, such as one or more application specific integrated circuits (ASIC), or one or more microprocessors (DSP), or one or more field programmable gate arrays (FPGA). For another example, when a module above is implemented in the form of a processing element scheduling program code, the processing element may be a general-purpose processor, such as a central processing unit (CPU) or other processor that can call program code. For another example, these modules can be integrated together and implemented in the form of a system-on-a-chip (SOC).

The terms "first", "second", etc. in the specification and claims of the present disclosure are used to distinguish similar objects, and are not necessarily used to describe a specific order or sequence. It should be understood that the data used in this way can be interchanged where appropriate, so that the embodiments of the present disclosure described here, such as those illustrated or described here, are implemented in a sequence other than the ones illustrated or described here. In addition, the terms "including" and "having" and any of their variations are intended to cover non-exclusive inclusions, for example, a process, method, system, product or device that includes a series of steps or units is not necessarily limited to those steps or units clearly listed, but may include other steps or units that are not clearly listed or inherent to these processes, methods, products or devices. In addition, the use of "and/or" in the specification and claims represents at least one of the connected objects, such as A and/or B and/or C, indicating that there are 7 situations including A alone, B alone, C alone, and both A and B exist, B and C exist, A and C exist, and A, B and C exist. Similarly, the use of " at least one of A and B" in the specification and claims should be understood as "A alone, B alone, or A and B exist".

Obviously, those skilled in the art can make various changes and modifications to the present disclosure without departing from the spirit and scope of the present disclosure. Thus, if these modifications and variations of the present disclosure fall within the scope of the claims of the present disclosure and their equivalents, the present disclosure is also intended to include these modifications and variations.

## Claims

1. A satellite control method, comprising:
obtaining, by a first satellite, interference avoidance notification information, wherein the interference avoidance notification information is interference avoidance notification information relative to a second satellite;
in a case that the first satellite enters or is about to enter an interference avoidance protection band of the second satellite, performing, by the first satellite, an interference avoidance operation according to the interference avoidance notification information, wherein the interference avoidance operation comprises a beam management.

2. The method according to claim 1, wherein the interference avoidance notification information comprises relevant information of the second satellite.

3. The method according to claim 2, wherein the relevant information of the second satellite comprises at least one of the following:
ephemeris information of the second satellite;
coverage position information of the second satellite;
frequency information of the second satellite;
beam direction information of the second satellite; or
a beam width of the second satellite.

4. The method according to claim 1, wherein the interference avoidance notification information comprises beam management information.

5. The method according to claim 4, wherein the beam management information comprises at least one of the following:
beam scheduling information or beam steering information.

6. The method according to claim 1, wherein the obtaining the interference avoidance notification information comprises:
obtaining, by the first satellite, the interference avoidance notification information through a ground gateway.

7. The method according to claim 6, wherein obtaining, by the first satellite, the interference avoidance notification information through the ground gateway comprises one of the following:
receiving, by the first satellite, the interference avoidance notification information sent by a ground network controller, through the ground gateway;
receiving, by the first satellite, the interference avoidance notification information sent by a satellite controller, through the ground gateway;
receiving, by the first satellite, the interference avoidance notification information sent by a network operation and control center, through the ground gateway; or
receiving, by the first satellite, the interference avoidance notification information sent by a ground base station, through the ground gateway.

8. The method according to any one of claims 1 to 7, wherein the beam management comprises one of the following conditions:
beam scheduling and beam steering.

9. The method according to claim 8, wherein the beam scheduling comprises:
not scheduling a first beam, wherein the first beam is a beam in the first satellite that satisfies at least one of the following:
frequency information matches the frequency information of the second satellite;
a coverage position matches a coverage position of the second satellite;
and/or
the beam steering comprises at least one of the following:
turning off a second beam;
reducing a beam transmission power;
changing an operating frequency of a third beam;
changing a coverage position of a fourth beam;
wherein the second beam is a beam of the first satellite that satisfies at least one of the following conditions:
frequency information matches the frequency information of the second satellite;
a coverage position matches a coverage position of the second satellite;
the third beam is a beam in the first satellite, whose frequency information matches the frequency information of the second satellite;
the fourth beam is a beam in the first satellite, whose coverage position matches the coverage position of the second satellite.

10. The method according to any one of claims 1 to 7, wherein further comprising:
sending, by the first satellite, a notification message to a terminal, wherein the notification message is used by the terminal to perform a service switching.

11. The method according to claim 10, wherein the notification message comprises:
new beam information, used by the terminal to select a new beam to access.

12. The method according to claim 11, wherein the new beam information comprises at least one of the following:
an effective time of the new beam, a beam direction of the new beam, or frequency band information of the new beam.

13. A satellite control method, comprising:
generating, by a communication device, interference avoidance notification information, wherein the interference avoidance notification information is interference avoidance notification information relative to a second satellite;
sending, by the communication device, the interference avoidance notification information to a first satellite, wherein the first satellite is a satellite that enters or is about to enter an interference avoidance protection band of the second satellite.

14. The method according to claim 13, wherein the interference avoidance notification information comprises relevant information of the second satellite.

15. The method according to claim 14, wherein the relevant information of the second satellite comprises at least one of the following:
ephemeris information of the second satellite;
coverage position information of the second satellite;
frequency information of the second satellite;
beam direction information of the second satellite; or
a beam width of the second satellite.

16. The method according to claim 13, wherein the interference avoidance notification information comprises beam management information.

17. The method according to claim 16, wherein the beam management information comprises at least one of the following:
beam scheduling information or beam steering information.

18. The method according to claim 13, wherein the sending, by the communication device, the interference avoidance notification information to the first satellite comprises:
sending, by the communication device, the interference avoidance notification information to the first satellite, through a ground gateway.

19. The method according to any one of claims 13 to 18, further comprising:
sending, by the communication device, a notification message to a terminal, wherein the notification message is used by the terminal to perform a service switching, and the terminal is a terminal associated with the first satellite.

20. The method according to claim 19, wherein the notification message comprises:
new beam information, used by the terminal to select a new beam to access.

21. The method according to claim 20, wherein the new beam information comprises at least one of the following:
an effective time of the new beam, a beam direction of the new beam, or frequency band information of the new beam.

22. The method according to any one of claims 13 to 18, further comprising:
sending, by the communication device, an interference assistance message to a third satellite, wherein the interference assistance message is used by the third satellite to adjust a beam angle to cover a coverage area of the first satellite.

23. A service switching method, comprising:
obtaining, by a terminal, a notification message, wherein the notification message is used by the terminal to perform a service switching, wherein the terminal is associated with a first satellite, the first satellite is a satellite that enters or is about to enter an interference avoidance protection band of the second satellite;
performing, by the terminal, the service switching based on the notification message.

24. The method according to claim 23, wherein the notification message comprises:
new beam information, used by the terminal to select a new beam to access;
the service switching comprises:
selecting a new beam to access.

25. The method according to claim 24, wherein the new beam information comprises at least one of the following:
an effective time of the new beam, a beam direction of the new beam, or frequency band information of the new beam.

26. A satellite, the satellite being a first satellite, comprising: a memory, a transceiver, and a processor, wherein
the memory is configured to store a computer program; a transceiver is configured to send and receive data under a control of the processor; and the processor is configured to read the computer program in the memory to perform:
obtaining interference avoidance notification information, wherein the interference avoidance notification information is interference avoidance notification information relative to a second satellite;
in a case that the first satellite enters or is about to enter an interference avoidance protection band of the second satellite, performing an interference avoidance operation according to the interference avoidance notification information, wherein the interference avoidance operation comprises a beam management.

27. The satellite according to claim 26, wherein the interference avoidance notification information comprises relevant information of the second satellite.

28. The satellite according to claim 26, wherein the interference avoidance notification information comprises beam management information.

29. The satellite according to claim 26, wherein the obtaining the interference avoidance notification information comprises:
obtaining, by the first satellite, the interference avoidance notification information through a ground gateway.

30. The satellite according to any one of claims 26 to 29, wherein the beam management comprises one of the following conditions:
beam scheduling and beam steering.

31. The satellite of any one of claims 26 to 29, further comprising:
sending, by the first satellite, a notification message to a terminal, wherein the notification message is used by the terminal to perform a service switching.

32. A communication device, comprising: a memory, a transceiver and a processor, wherein the memory is configured to store a computer program; a transceiver is configured to send and receive data under a control of the processor; and the processor is configured to read the computer program in the memory to perform:
generating interference avoidance notification information, wherein the interference avoidance notification information is interference avoidance notification information relative to a second satellite;
sending the interference avoidance notification information to a first satellite, wherein the first satellite is a satellite that enters or is about to enter an interference avoidance protection band of the second satellite.

33. The method according to claim 32, wherein the interference avoidance notification information comprises relevant information of the second satellite.

34. The method according to claim 32, wherein the interference avoidance notification information comprises beam management information.

35. A terminal comprising: a memory, a transceiver and a processor, wherein
the memory is configured to store a computer program; a transceiver is configured to send and receive data under a control of the processor; and the processor is configured to read the computer program in the memory to perform:
obtaining a notification message, wherein the notification message is used by the terminal to perform a service switching, wherein the terminal is associated with a first satellite, the first satellite is a satellite that enters or is about to enter an interference avoidance protection band of the second satellite;
performing the service switching based on the notification message.

36. A satellite, the satellite being a first satellite, comprising:
an obtaining unit, configured to obtain interference avoidance notification information, wherein the interference avoidance notification information is interference avoidance notification information relative to a second satellite;
an executing unit, configured to, in a case that the first satellite enters or is about to enter an interference avoidance protection band of the second satellite, perform an interference avoidance operation according to the interference avoidance notification information, wherein the interference avoidance operation comprises a beam management.

37. A communication device, comprising:
a generating unit, configured to generate interference avoidance notification information, wherein the interference avoidance notification information is interference avoidance notification information relative to a second satellite;
a first sending unit, configured to send the interference avoidance notification information to a first satellite, wherein the first satellite is a satellite that enters or is about to enter an interference avoidance protection band of the second satellite.

38. A terminal, comprising:
an obtaining unit, configured to obtain a notification message, wherein the notification message is used by the terminal to perform a service switching, wherein the terminal is associated with a first satellite, the first satellite is a satellite that enters or is about to enter an interference avoidance protection band of the second satellite;
an executing unit, configured to perform the service switching based on the notification message.

39. A processor-readable storage medium, storing a computer program, wherein the computer program is configured to cause the processor to execute the satellite control method according to any one of claims 1 to 12, or the computer program is configured to cause the processor to execute the satellite control method according to any one of claims 13 to 22, or the computer program is configured to cause the processor to execute the service switching method according to any one of claims 23 to 25.
